Europäisches Patentamt

European Patent Office

Office européen des brevets

(11) Publication number: **0 333 352**
**A2**

# EUROPEAN PATENT APPLICATION

(21) Application number: 89302112.1

(51) Int. Cl.⁴: **B24B 41/04**

(22) Date of filing: 02.03.89

(30) Priority: 18.03.88 JP 65099/88

(43) Date of publication of application:
20.09.89 Bulletin 89/38

(84) Designated Contracting States:
CH DE FR GB IT LI

(71) Applicant: SEIKO SEIKI KABUSHIKI KAISHA
3-1, Yashiki 4-chome
Narashino-shi Chiba(JP)

(72) Inventor: Ooshima, Jinichiro SEIKO SEIKI
KABUSHIKI KAISHA
3-1, Yashiki 4-chome
Narashino-shi Chiba(JP)

(74) Representative: Miller, Joseph et al
J. MILLER & CO. Lincoln House 296-302 High
Holborn
London WC1V 7JH(GB)

(54) Internal grinding machine.

(57) An internal grinding machine comprising support means (7) for holding a workpiece (1); a spindle (2) having a grinding wheel portion (3) arranged to carry a grinding wheel (4); bearing means (11-13) for rotatably mounting the spindle (2); driving means (14,50) for rotating the spindle (2); and feeding means (8a,22,23) for effecting relative movement between the support means (7) and the spindle (2) to enable a grinding wheel (4) carried by the grinding wheel portion (3) to effect grinding of a bore or internal recess (a) in a workpiece (1) carried by the support means (7) characterised by sensor means (15-17) for detecting the position of the spindle (2) relative to the bearing means (11-13); and control means (33), controlled by the sensor means (15-17), for controlling the operation of the bearing means (11-13) so as, when necessary, to adjust the position of the axis of the spindle (2) so that the bore or internal recess (a) can be ground to a substantially cylindrical form.

FIG. 3

# INTERNAL GRINDING MACHINE

The present invention relates to an internal grinding machine and, although the invention is not so restricted, it relates more particularly to a machine for grinding the surface of a long bore in a workpiece so as to provide the long bore with high cylindricality and straightness.

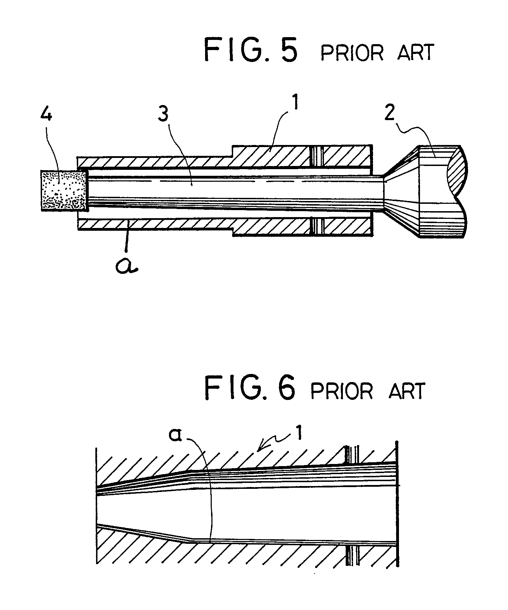

When a long bore a of a workpiece 1 such as a plunger valve is ground as shown in Figure 5, the workpiece 1 is normally rotated on the work head of a grinding machine, and a grinding wheel 4 provided at one end of a spindle rotor 2 through a grinding or quill shaft 3 is also rotated at high speed. The rotating grinding wheel 4 is shifted (traversed) along the axis of rotation of the grinding wheel 4 to thereby grind the surface of the long bore a.

However, since the quill shaft 3 bends during grinding in the known internal grinding machine, the diameter of the long bore a of the workpiece 1 reduces as it reaches the outer end of the long bore as shown in Figure 6. In other words, the long bore a has a taper at the outer end thereof. As a result, the cylindricality and straightness of the long bore a are inadequate.

In order to solve this problem, the Applicants have previously proposed in Japanese Patent Application No. 61-9769 that grinding should be carried out with the quill shaft inclined at a predetermined angle after a point at which the quill shaft starts bending.

However, in order to incline the quill shaft, mechanical clamps fastening the spindle rotor support to a work table have to be loosened and an eccentric cam has to be used for adjusting the spindle rotor support at a required angle after which the spindle rotor support is fastened with the mechanical clamps again. However, this has the drawbacks that it is not possible to continuously adjust the tilt angle, the mechanism is complicated and it is difficult to make fine adjustment of the tilt angle due to backlash.

According to the present invention, there is provided an internal grinding machine comprising support means for holding a workpiece; a spindle having a grinding wheel portion arranged to carry a grinding wheel; bearing means for rotatably mounting the spindle; driving means for rotating the spindle; and feeding means for effecting relative movement between the support means and the spindle to enable a grinding wheel carried by the grinding wheel portion to effect grinding of a bore or internal recess in a workpiece carried by the support means characterised by sensor means for detecting the position of the spindle relative to the bearing means; and control means, controlled by the sensor means, for controlling the operation of the bearing means so as, when necessary, to adjust the position of the axis of the spindle so that the bore or internal recess can be ground to a substantially cylindrical form.

Preferably there are calculating means for calculating the value of the tilt angle of the axis of the grinding wheel portion with respect to the axis of a workpiece supported by the support means, the control means being controlled both by the sensor means and by the calculating means so as to be arranged to tilt the axis of the spindle at an angle corresponding to the said tilt angle.

The bearing means may comprise a plurality of electromagnetic bearing means which magnetically support the spindle, the control means being arranged to supply electrical signals to the electromagnetic bearing means so as to adjust the magnetic forces which they respectively exert on the spindle.

The electromagnetic bearing means may comprise radial elecotromagnetic bearing means which magnetically support the spindle in the radial direction thereof, and axial electromagnetic bearing means which magnetically support the spindle in the axial direction thereof.

The sensor means may comprise radial position sensor means for detecting the radial position of the spindle, and axial position sensor means for detecting the axial position of the spindle.

The feeding means preferably comprises X-direction feeding means for effecting relative movement between the support means and the spindle axially of the latter, and Y-direction feeding means for effecting relative movement therebetween perpendicular to the axis of the spindle.

The control means may be controlled by a computer to effect continuous adjustment when necessary, of the axis of the spindle until the bore or internal recess in a workpiece is ground to a predetermined size.

The grinding machine of the present invention enables grinding to be carried out with high cylindricality and straightness.

The invention is illustrated, merely by way of example, in the accompanying drawings, in which:-

Figure 1 is a perspective view showing an embodiment of an internal grinding machine according to the present invention;

Figure 2 is a sectional schematic view of a portion of the internal grinding machine of Figure 1;

Figure 3 is a block diagram showing an electrical control system for the internal grinding machine of Figure 1;

Figure 4 is a flow chart showing the operation of the internal grinding machine of Figure 1; and

Figures 5 and 6 illustrate the grinding of a long bore in a workpiece by an internal grinding machine of the prior art.

Terms such as "left" and "right" as used in the description below are to be understood to refer to directions as seen in the accompanying drawings.

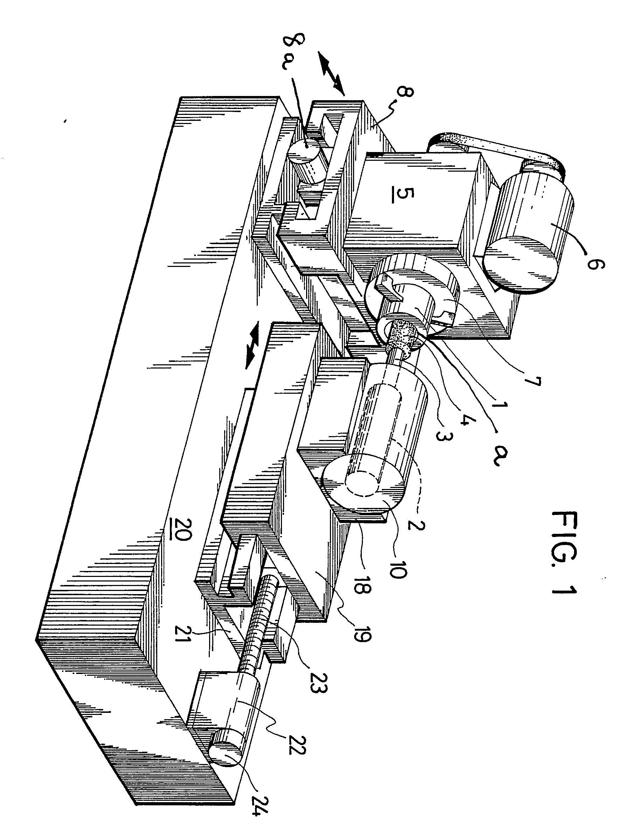

In Figure 1 there is shown an internal grinding machine according to the present invention for use in grinding a long bore or internal recess a in a workpiece 1. A spindle rotor 2 has a grinding wheel or quill shaft 3 provided at one end of the spindle rotor 2, and a grinding wheel 4 is provided at the outer end of the quill shaft 3.

The workpiece 1 is held by a chuck 7 which is rotationally driven by a motor 6 fixed on a work head 5. The work head 5 is mounted on a work table 8. The work table 8 can be moved by a servo motor 8a in Y directions perpendicular to the axis of rotation of the workpiece 1.

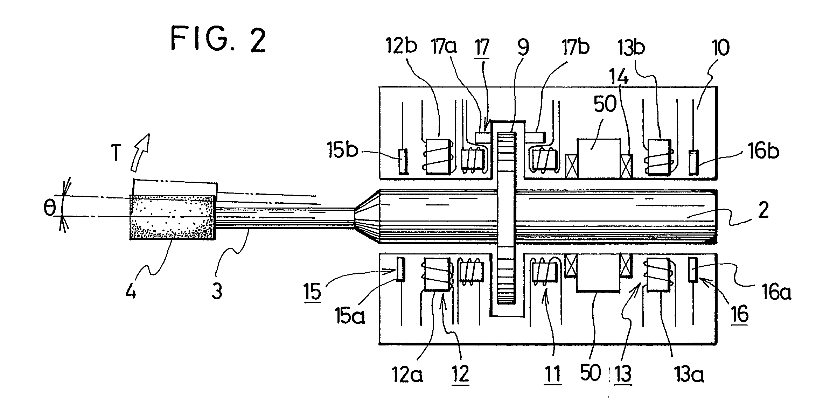

The spindle rotor 2 is supported by magnetic bearings as shown in Figure 2.

The spindle rotor 2 has a disk 9 fixed to a central portion of the spindle rotor 2. The disk 9 is positioned axially by thrust magnetic bearings 11 which are provided on the spindle head 10. Axial direction forces acting on the spindle rotor 2 are checked by the thrust magnetic bearings 11. The spindle rotor 2 is also positioned radially by radial magnetic bearings 12 and 13 at opposite ends of the spindle rotor 2.

The thrust and radial magnetic bearings 11-13 are not described in detail since they are well known per se. The spindle rotor 2 is magnetically supported and floated between a plurality of pairs of electromagnets 12a, 12b, 13a, and 13b. In this case, a gap of around 0.5mm is maintained between each electromagnet and the periphery of the spindle rotor 2.

Therefore, the axis of the spindle rotor 2 can be inclined and/or shifted by controlling currents used to excite the electromagnets 12a, 12b, 13a and 13b of the radial magnetic bearings 12 and 13. For example, when an excitation current applied to the electromagnets 12b and 13b is made larger than that applied to the electromagnets 12a and 13a, the spindle rotor 2 is held in a position in which its axis is shifted towards the electromagnets 12b and 13b by an amount corresponding to the difference in excitation current between these pairs, such a shift being in a direction perpendicualr to the axis of rotation of the workpiece 1; and when an excitation current applied to the electromagnet 12b is made larger than that applied to the electromagnet 12a, and at the same time an excitation current applied to the electromagnet 13b is made smaller than that applied to the electromagnet 13a, the axis of the spindle rotor 2 can be inclined relative to the central axis of the magnetic bearings.

By adjusting the tilt of the spindle rotor 2, the grinding wheel 4 can be inclined in the direction T at a tilt angle $\theta$.

A motor stator 50 effects rotation of the spindle rotor 2 when a current flows through a coil 14. Therefore the spindle rotor 2 functions as a rotor of a motor, and the motor stator 50 functions as a stator of a motor.

Position sensors 15 and 16 are provided at the right and left end portions of the spindle rotor 2. They are respectively composed of a pair of sensors 15a and 15b and a pair of sensors 16a and 16b. The position sensors 15, 16 detect the radial positions of the spindle rotor 2 at the two "supporting" points, i.e. at the points between the electromagnets 12a and 12b, and between the electromagnets 13a and 13b. A position sensor 17 composed of a pair of sensors 17a and 17b detects the axial position of the disk 9 and hence of the spindle rotor 2.

The spindle head 10 is fixed to a work table 19 through a spindle stock 18. The work table 19 is mounted on a guide member 21 fixed on a bed 20 in such a manner that the work table 19 can be moved along the axis of the spindle rotor 2.

The work table 19 is axially movable in X directions by a thread screw 23 which is rotated by a servo motor 22, and the amount of movement of the thread screw 23 and therefore of the spindle 2 is detected by an encoder 24 directly connected to the servo motor 22.

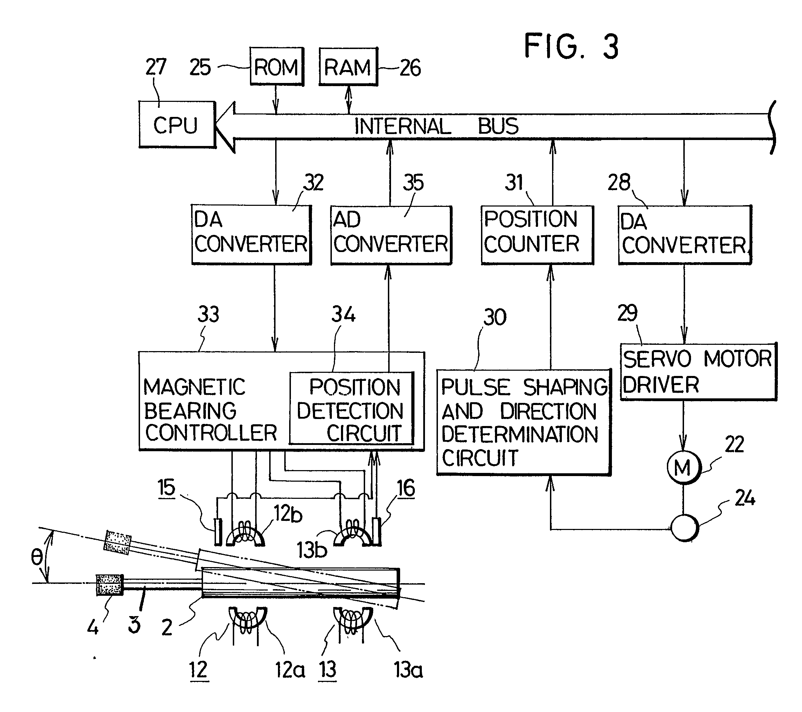

Figure 3 is a block diagram showing an electrical control system of the grinding machine. The control system comprises a CPU 27 which carries out a required computation using a ROM 25 storing a system program and a RAM 26 storing a set of working memories. The CPU 27 totally controls all the system of the equipment.

A servo driver 29 receives a control signal which is outputted from the CPU 27 and which is D/A converted by a D/A converter 28, and thereby rotationally drives the servo motor 22. The rotational speed of the servo motor 22 is detected by the encoder 24, and the detected signal is processed by a pulse shaping and direction determination circuit 30 and and then sent through a position counter 31 to the CPU 27.

The CPU 27 provides an output signal through a D/A converter 32 to a magnetic bearing controller 33, and controls currents to excite the electromagnets 12a, 12b, 13a, and 13b of the magnetic bearings 12 and 13. The radial position of the spindle rotor 2, which is controlled by the applied currents used for excitation, is detected by the position sensors 15 and 16, and the detected signal is sent through a position detection circuit 34 in the magnetic bearing controller 33 and an A/D converter 35 to the CPU 27.

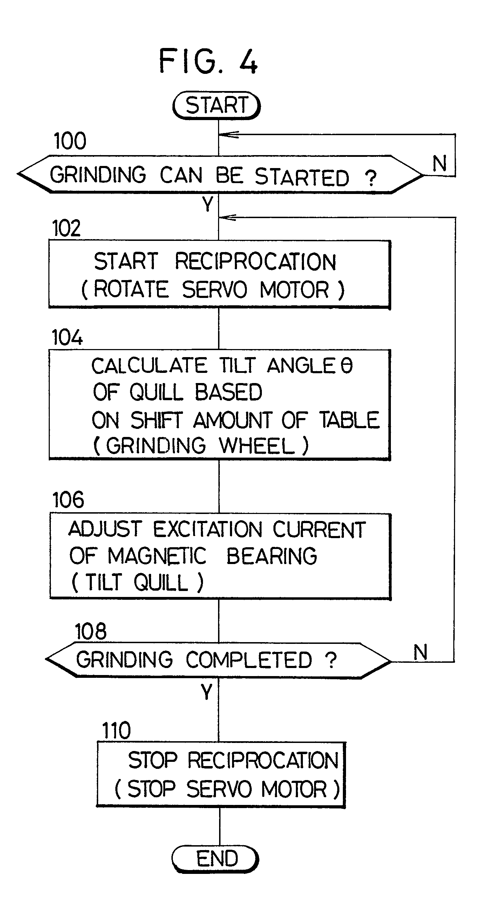

The controlling operation of the CPU is hereunder described with reference to the flow chart in Figure 4.

Once grinding work is started with both the workpiece 1 and the spindle rotor 2 being rotated in predetermined directions (STEP 100), reciprocal grinding, or reciprocation, is started in which the grinding wheel 4 is alternately advanced and withdrawn in and along the long bore a of the workpiece 1. The reciprocation is carried out by controlling the servo motor 22 with the encoder 24 detecting the position of the work table 19 (STEP 102).

The RAM 26 stores data relating to the positions of the grinding wheel 4 in the long bore a, and data relating to the tilt angles $\theta$ of the grinding wheel 4 and grinding wheel shaft 3. Based on the extent to which the work table 19 has been shifted, the tilt angle $\theta$ of the grinding wheel shaft 3 is calculated or computed using the data stored in the RAM 26, and thereby the current to exite the magnetic bearings 15 and 16 is controlled to incline the grinding wheel shaft 3 at the computed tilt angle $\theta$ (STEPS 104,106).

The surface of the long bore a is ground to a predetermined dimension with the tilt angle of the grinding wheel shaft 3 being adjusted (STEPS 108, 110).

In the above embodiment, the extent to which the table 19 is shifted is detected by the encoder 24.

However, a table shift detection equipment composed of a proximity switch device can also be used instead. The proximity switch device may comprise contactless switches which do not require mechanical contacts for a switching operation.

Further, although in the above embodiment, control of the tilt angle of the grinding wheel shaft 3 is continuously carried out in response to the shift of the work table 19, the tilt angle $\theta$ of the grinding wheel shaft 3 can also be adjusted at intervals of predetermined shifts of the work table. However it should be noted that by continuously adjusting the tilt angle of the grinding wheel in the manner described here with reference to the embodiment, a long bore can be ground with high cylindricality and straightness.

A further possibility is to arrange that the control exercised by the CPU 27, instead of being used to adjust the tilt of the axis of the spindle rotor 2, is used to move the latter in a direction perpendicular to the axis of the workpiece 1.

## Claims

1. An internal grinding machine comprising support means (7) for holding a workpiece (1); a spindle (2) having a grinding wheel portion (3) arranged to carry a grinding wheel (4); bearing means (11-13) for rotatably mounting the spindle (2); driving means (14,50) for rotating the spindle (2); and feeding means (8a,22,23) for effecting relative movement between the support means (7) and the spindle (2) to enable a grinding wheel (4) carried by the grinding wheel portion (3) to effect grinding of a bore or internal recess (a) in a workpiece (1) carried by the support means (7) characterised by sensor means (15-17) for detecting the position of the spindle (2) relative to the bearing means (11-13); and control means (33), controlled by the sensor means (15-17), for controlling the operation of the bearing means (11-13) so as, when necessary, to adjust the position of the axis of the spindle (2) so that the bore or internal recess (a) can be ground to a substantially cylindrical form.

2. An internal grinding machine as claimed in claim 1 characterised by calculating means (26) for calculating the value of the tilt angle ( $\theta$ ) of the axis of the grinding wheel portion (3) with respect to the axis of a workpiece (1) supported by the support means (7), the control means (33) being controlled both by the sensor means (15-17) and by the calculating means (26) so as to be arranged to tilt the axis of the spindle (2) at an angle corresponding to the said tilt angle ( $\theta$ ).

3. An internal grinding machine as claimed in claim 1 or 2 characterised in that the bearing means comprise a plurality of electromagnetic bearing means (11-13) which magnetically support the spindle (2), the control means (33) being arranged to supply electrical signals to the electromagnetic bearing means (11-13) so as to adjust the magnetic forces which they respectively exert on the spindle (2).

4. An internal grinding machine as claimed in claim 3 characterised in that the electromagnetic bearing means (11-13) comprise radial electromagnetic bearing means (12,13) which magnetically support the spindle (2) in the radial direction thereof, and axial electromagnetic bearing means (11) which magnetically support the spindle (2) in the axial direction thereof.

5. An internal grinding machine as claimed in any preceding claim characterised in that the sensor means (15-17) comprise radial position sensor means (15,16) for detecting the radial position of the spindle (2), and axial position sensor means (17) for detecting the axial position of the spindle (2).

6. An internal grinding machine as claimed in any preceding claim characterised in that the feeding means (8a, 22, 23) comprises X-direction feeding means (22,23) for effecting relative movement between the support means (7) and the spindle (2) axially of the latter, and Y-direction feeding means (8a) for effecting relative movement therebetween perpendicular to the axis of the spindle (2).

7. An internal grinding machine as claimed in any preceding claim characterised in that the control means (33) is controlled by a computer (27) to effect continuous adjustment, when necessary, of the axis of the spindle (2) until the bore or internal recess (a) in a workpiece is ground to a predetermined size.

8. An internal grinding machine comprising:
a spindle rotor (2) having a grinding wheel (4) fixed at one end thereof through a grinding wheel shaft (3);
a spindle head (10) encompassing said spindle rotor (2);
feeding means (8a,22,23) for providing relative movements between said grinding wheel (4) and a workpiece (1);
electromagnetic bearing means (11) coupled with said spindle rotor (2) for magnetically floating and supporting said spindle rotor (2);
sensor means (15,17) for detecting the position of said spindle rotor (2) relative to said electromagnetic bearing means (11);
calculating means (26) for calculating the tilt angle ( θ) of said grinding wheel (4) relative to the axis of revolution of the workpiece (1) according to the position of said grinding wheel (4) at the surface of the bore in the workpiece (1); and
control means (33) for controlling said electromagnetic bearing means (11) thereby tilting the axis of said spindle rotor (2) at an angle corresponding to the calculated tilt angle ( θ) of said grinding wheel (4) and/or shifting the axis of said spindle rotor (2) in a direction perpendicular to the axis of rotation of the workpiece (1).

9. The internal grinding machine defined in claim 8, wherein said control means includes means to continuously control said electromagnetic bearing means until the bore of the workpiece is ground to a predetermined size.

FIG. 1

FIG. 2

# FIG. 3

27  25  [ROM]  [RAM]  26

[CPU] ◁———————— INTERNAL    BUS ————————————

32  35  31  28

| DA CONVERTER | AD CONVERTER | POSITION COUNTER | DA CONVERTER |

33  34  30  29

| MAGNETIC BEARING CONTROLLER | POSITION DETECTION CIRCUIT | PULSE SHAPING AND DIRECTION DETERMINATION CIRCUIT | SERVO MOTOR DRIVER |

15  12b  16

13b

(M) 22

24

θ

4  3  2

12  12a  13  13a

# FIG. 4

START

100 GRINDING CAN BE STARTED ? — N

Y

102
START RECIPROCATION
(ROTATE SERVO MOTOR)

104
CALCULATE TILT ANGLE θ
OF QUILL BASED
ON SHIFT AMOUNT OF TABLE
(GRINDING WHEEL)

106
ADJUST EXCITATION CURRENT
OF MAGNETIC BEARING
(TILT QUILL)

108 GRINDING COMPLETED ? — N

Y

110
STOP RECIPROCATION
(STOP SERVO MOTOR)

END

FIG. 5 PRIOR ART

FIG. 6 PRIOR ART